Europäisches Patentamt

European Patent Office

Office européen des brevets

(19)

(11) Numéro de publication : **0 183 599**
**B1**

(12) **FASCICULE DE BREVET EUROPÉEN**

(45) Date de publication du fascicule du brevet :
02.03.88

(51) Int. Cl.⁴ : **B 60 G  5/04**

(21) Numéro de dépôt : 85402175.5

(22) Date de dépôt : **12.11.85**

(54) Système de liaison tandem sur véhicule industriel.

(30) Priorité : 16.11.84 FR 8417498

(43) Date de publication de la demande :
04.06.86 Bulletin 86/23

(45) Mention de la délivrance du brevet :
02.03.88 Bulletin 88/09

(84) Etats contractants désignés :
DE

(56) Documents cités :
GB-A-  758 643
GB-A- 2 063 784
AUTOMOTIVE ENGINEER, vol. 8, no. 5, octobre-novembre 1983, pages 80,81, Southend-on-Sea, GB;
B. GODWIN: "Continental comment"

(73) Titulaire : **RENAULT VEHICULES INDUSTRIELS**
**Société Anonyme dite:**
**129 rue Servient "La Part Dieu"**
**F-69003 Lyon (FR)**

(72) Inventeur : **Mounier-Poulat, François**
**"Les Baboulières"**
**F-38540 Heyrieux (FR)**
Inventeur : **Fourel, Pierre**
**21, rue Saint Maurice**
**F-69008 Lyon (FR)**

(74) Mandataire : **Réal, Jacques et al**
**Régie Nationale des Usines Renault SCE 0804**
**F-92109 Boulogne Billancourt Cedex (FR)**

Jouve, 18, rue St-Denis, 75001 Paris, France

## Description

La présente invention se rapporte à un système de liaison tandem de trains de roues, notamment pour les véhicules industriels, du type décrit dans la partie précaractérisante de la revendication 1, par exemple connu de « Automotive Engineer », vol. 8 (1983) n° 5, pages 80-81.

Ces systèmes ont pour mission de transmettre la charge verticale de la structure porteuse au sol ; on utilise généralement un ressort à lames longitudinal, dont les extrémités sont chacunes solidarisées à un pont et dont la partie médiane peut pivoter autour d'un axe horizontal transversal maintenu fixe par rapport à la structure du véhicule au moyen d'une ferrure dite « pivot ».

Dans ce cas, les charges transversales auxquelles sont soumises les roues, sont transmises à la structure porteuse par le ressort lui-même.

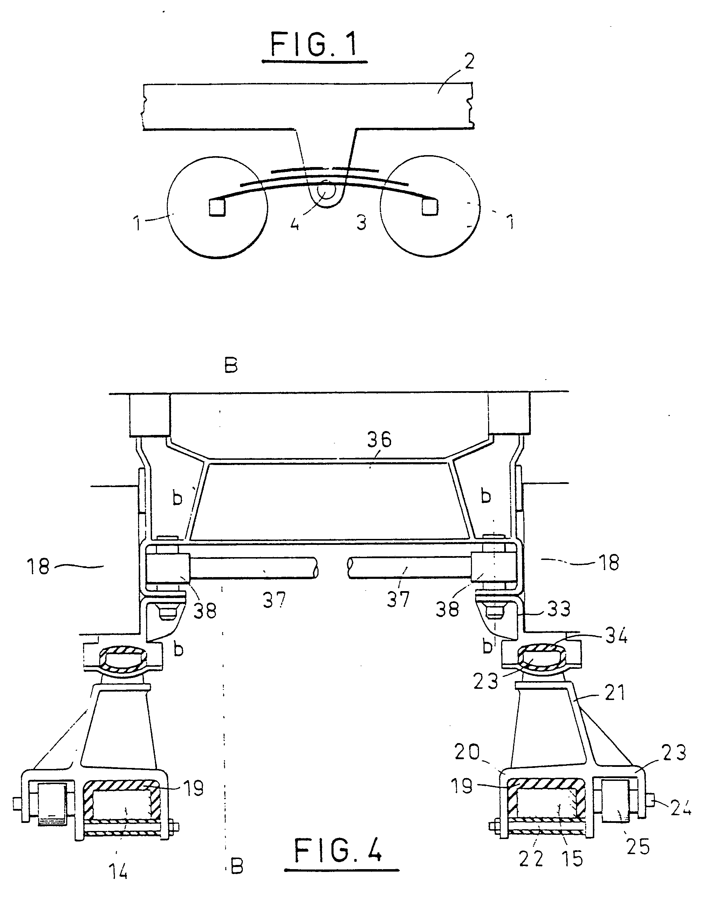

La présente invention telle que caractérisée dans la revendication 1 a pour but de pallier les inconvénients ci-dessus et sera décrite, à titre d'exemple non limitatif, au regard des figures 1 et 4 ci-jointes qui se rapportent respectivement :

la figure 1, à un système de liaison tandem selon l'art antérieur ;

la figure 2, à une vue en plan d'un système de liaison tandem conforme à la présente invention, se rapportant à un train de roues arrière de véhicule industriel ;

la figure 3, à une coupe longitudinale selon B-B de la figure 4 du dispositif précédent ;

la figure 4, à une coupe transversale selon A-A de la figure 3 ;

la figure 5, à une coupe transversale selon C-C de la figure 3.

En se référant à la figure 1, qui représente un système de liaison tandem selon l'état de la technique antérieure, on voit que toutes les charges auxquelles est soumise la structure 2 du véhicule sont transmises directement aux ponts 1 par les lames de ressort 3, susceptibles de pivoter autour de l'axe transversal 4.

Le ressort 3, soumis dans certaines conditions à des contraintes longitudinales ou transversales qu'il n'a pas pour mission d'assumer, peut subir des déformations nuisibles à son fonctionnement optimal.

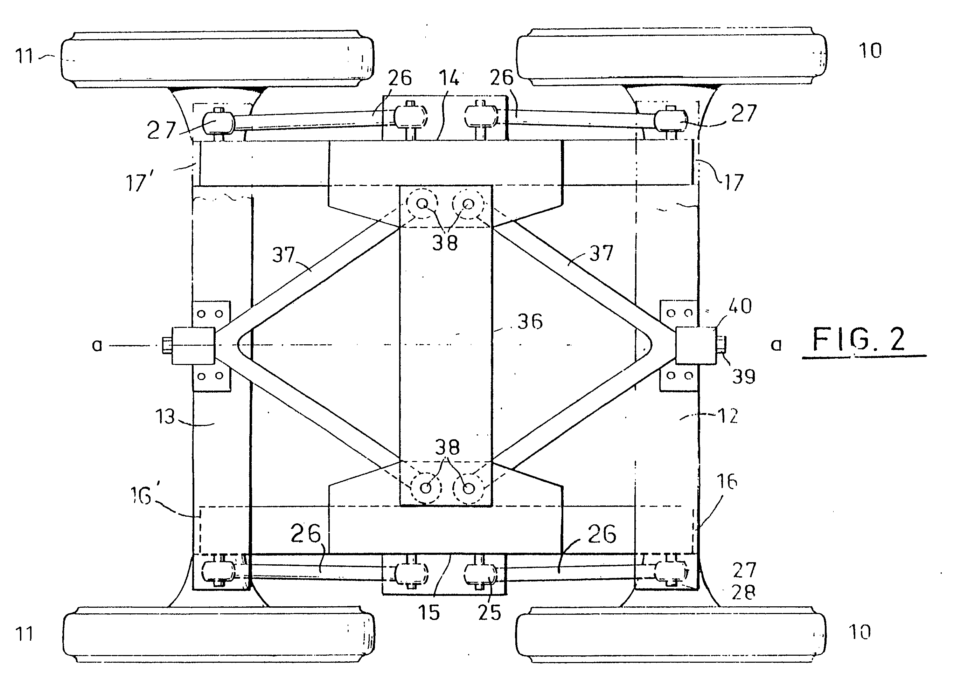

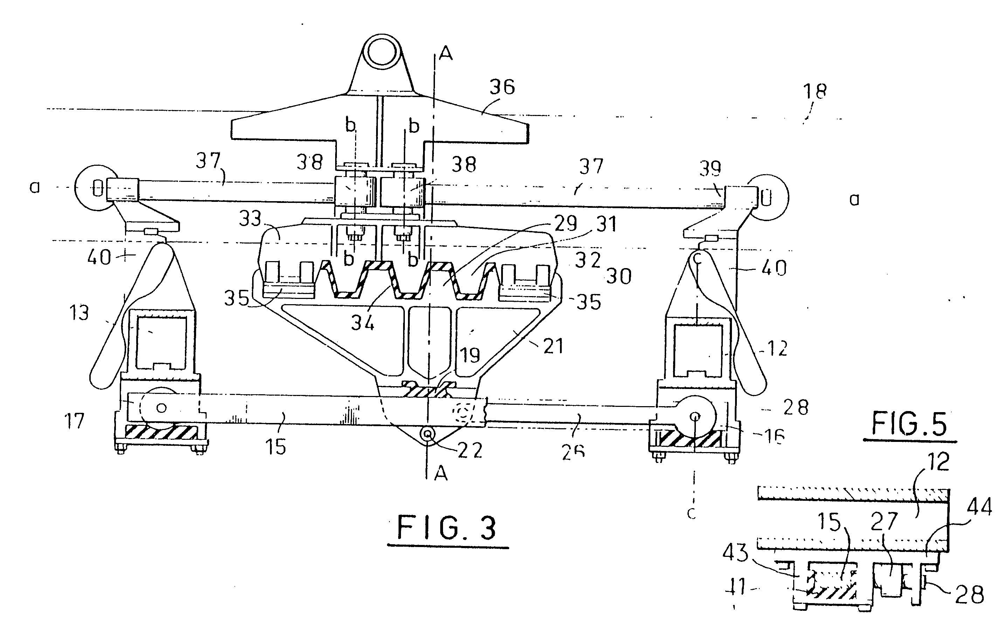

Au contraire, dans le dispositif qui va être décrit aux figures 2 à 4, les lames de ressort agissent librement, sous l'action des seules charges verticales transmises par la structure, à l'exclusion de toute autre charge transversale ou longitudinale.

A la figure 2, on voit que les roues 10 et 11 sont solidarisées à la fois aux ponts respectivement 12-13 et aux extrémités 16-17 et 16'-17' des lames des ressorts 14-15. Ces derniers sont réunis à la structure 18 du véhicule par leur partie médiane. A ce niveau (voir figure 4), ils comportent un coussin élastique 19 en U enveloppant leurs parties supérieures et latérales s'intégrant dans la partie inférieure de forme complémentaire 20 d'une ferrure 21.

Les lames de ressort 14-15 sont, par ailleurs, maintenues dans cette ferrure 21 grâce à un axe 22 transversal et horizontal. La face latérale externe de ladite ferrure 21 se poursuit par une chape 23, permettant la fixation au moyen d'un axe 24 de l'une des extrémités 25 des biellettes 26.

Chaque extrémité 16-17 des lames des ressorts 14-15 repose sur un coussin élastique 41 en forme de U qui enveloppe les parois latérales et assure le guidage transversal dudit ressort. Le coussin élastique 41 est encastré dans la partie inférieure 43 d'une ferrure 42 liée aux ponts 12 ou 13. La face latérale externe de ladite ferrure 42 se poursuit par une chape 44 permettant la fixation au moyen d'un axe 28 de l'une des extrémités 27 des biellettes 26.

La zone supérieure de la ferrure 21 comporte des plots centraux 29 et des éléments de charnière 30 coopérant avec leurs homologues, respectivement 31 et 32 situés à la partie inférieure d'un support 33 fixé aux longerons 18 participant à la structure du véhicule.

Entre les séries de plots 29 et 31 est disposé un élément intermédiaire déformable 34 en élastomère, les pièces 21 et 33 sont solidarisées au niveau des éléments de charnière 30-32 grâce à des articulations pivotantes autour d'un axe longitudinal horizontal 35.

Les longerons 18 sont réunis notamment au niveau du dispositif de l'invention, par une traverse 36 dont la partie inférieure permet la fixation des extrémités 38 d'une paire de biellettes 37, en forme de V et disposées dans un plan horizontal, dont les autres extrémités 39 prennent appui par l'intermédiaire d'une pièce 40 sur les ponts 12-13.

Les biellettes 37 sont mobiles en rotation au niveau des extrémités 39, selon un axe horizontal longitudinal médian a-a et, de façon analogue, au niveau de leurs extrémités 38 selon des axes verticaux b-b. Les articulations 38 et 39 peuvent être toutefois réalisées sous forme de rotules sphériques selon des dispositions connues.

La partie supérieure de la traverse 36 peut être aménagée en sellette de façon à servir d'attelage à une remorque.

Selon le dispositif qui vient d'être décrit, on voit que les efforts longitudinaux sont pris en compte par les biellettes inférieures 26 et la ferrure 21, les efforts transversaux par les bielles supérieures 37, qui sont préférentiellement disposées à une distance relativement faible de l'axe de rotation 35 des ferrures 21.

De ce qui précède, il résulte que lors d'un mouvement de roulis de la caisse, induisant un déplacement relatif des ponts 12-13 par rapport aux ressorts 14-15, la reprise des charges transversales et longitudinales qui en résultent ne sollicite pas les ressorts 14-15. Ces derniers sont de préférence réalisés en matériaux synthétiques composites, de section constante, notamment par le procédé de pultrusion.

## Revendications

1. Système de liaison tandem de trains de roues, notamment pour véhicules industriesl, du type permettant la transmission aux ponts (12-13), reliés entre eux par deux ressorts à lames (14-15), des charges verticales en provenance de la structure porteuse comprenant des longerons (18), ces derniers étant réunis par une traverse (36) permettant la fixation de l'une des extrémités d'une paire de biellettes (37) en forme de V, disposée dans un plan horizontal, dont l'autre extrémité (39) prend appui, par l'intermédiaire d'une pièce (40) sur les ponts (12-13) chaque ressort à lame (14-15) étant doublé par une biellette (26) caractérisé par le fait que chaque biellette est fixée par l'une de ses extrémités à la jonction des ressorts (14-15) sur les ponts (12-13) et, d'autre part, à chacune des ferrures (21) soutenant lesdits ressorts par leur partie médiane, lesdites ferrures (21) s'articulant par des charnières mobiles en rotation autour d'un axe horizontal et longitudinal (35), sur des supports (33) fixés aux longerons (18) de la structure du véhicule.

2. Système de liaison tandem selon la revendication 1, caractérisé en ce que la ferrure (21) et le support (33), au niveau de leur articulation, comportent des plots respectivement (29) et (31) séparés par un élément intermédiaire déformable (34) en élastomère et coopérant entre eux pour prendre en charge les efforts longitudinaux en provenance des roues.

3. Système de liaison tandam selon la revendication 1, caractérisé en ce que les lames de ressort (14-15) sont coiffées d'un coussin élastique (19) en U au niveau de leur jonction avec la ferrure (21).

4. Système de liaison tandem selon la revendication 1, caractérisé en ce que les biellettes (37) sont situées dans un plan horizontal, situé à une faible distance de celui qui contient les axes (35), leur liaison à la traverse (36) étant effectuée au moyen d'articulations mobiles autour d'axes verticaux b-b, tandis que leur liaison à la pièce intermédiaire (40) se fait grâce à une articulation mobile autour d'un axe horizontal a-a.

5. Système de liaison tandem selon la revendication 1, caractérisé en ce que la partie supérieure de la traverse (36) est aménagée en sellette d'attelage pour une remorque.

6. Système de liaison tandem selon la revendication 1, caractérisé en ce que les ressorts (14-15) sont en matériau composite synthétique, de section constante, et fabriqués par pultrusion.

## Claims

1. A system for the tandem connection of trains of wheels, in particular for industrial vehicles, of the type permitting transmission to the axles (12-13) which are connected together by two leaf springs (14-15) of the vertical loads originating from the load-carrying structure which comprises longitudinal members (18), the latter being connected by a transverse member (36) permitting fixing of one of the ends of a pair of links (37) of V-shaped configuration, which is disposed in a horizontal plane, the other end (39) of which is supported on the axles (12-13) by way of a member (40), each leaf spring (14-15) being doublet by a link (26) characterised in that each link is fixed by one of its ends to the connection of the springs (14-15) to the axles (12-13) and on the other hand to each of the fittings (21) supporting said springs by their central portion, being pivotally connected by hinge means which are movable in rotation about a horizontal and longitudinal axis (35) to supports (33) fixed to the longitudinal members (18) of the structure of the vehicle.

2. A tandem connecting system according to claim 1 characterised in that the fitting (21) and the support (33), at the location of their pivotal connection, comprise projections (29 and 31) respectively separated by a deformable intermediate element (34) of elastomer and co-operating with each other to carry the longitudinal forces originating from the wheels.

3. A tandem connecting system according to claim 1 characterised in that the leaf springs (14-15) are capped by an elastic U-shaped cushion (19) at the location of their connection to the fitting (21).

4. A tandem connecting system according to claim 1 characterised in that the links (37) are disposed in a horizontal plane located at a small spacing from that which contains the axes (35), the connection thereof to the transverse member (36) being effected by means of pivot connections movable about vertical axes b-b while their connection to the intermediate member (40) is effected by means of a pivot connection movable about a horizontal axis a-a.

5. A tandem connecting system according to claim 1 characterised in that the upper part of the transverse member (36) is arranged as a coupling table for a trailer.

6. A tandem connecting system according to claim 1 characterised in that the springs are (14-15) of composite synthetic material of constant section and produced by pultrusion.

## Patentansprüche

1. Tandemachsenverbindungssystem, insbesondere für Industriefahrzeuge, bei dem die Übertragung zu den Achsbrücken (12-13), die über zwei Blattfedern (14-15) miteinander verbunden sind, der senkrechten vom Aufbau stammenden Belastungen erfolgt, welcher Längsträger (18) aufweist, die durch eine Querstrebe (36) miteinander verbunden sind, umso die Befestigung eines der Enden eines Paares V-förmiger Schwingarme (37) zu ermöglichen, welche in einer waagrechten Ebene angeordnet sind, deren anderes Ende (39) sich mittels eines Teils (40) auf den Achsbrücken (12-13) abstützt und bei dem jede Blattfeder (14-15) durch einen Schwingarm (26) verdoppelt ist, dadurch gekennzeichnet, daß jeder Schwingarm mit einem seiner Enden an der Verbindungsstelle der Federn (14-15) mit den Brücken (12-13) befestigt ist und andererseits an jedem der Beschläge (21), die diese Federn in ihrem Mittenbereich tragen, befestigt ist, wobei diese Beschläge (21) mittels beweglicher Gelenke an einer waagrechten Längsachse (35) drehbeweglich angelenkt sind, an Halterungen (33), die an den Längsträgern (18) des Fahrzeugaufbaus befestigt sind.

2. Tandemachsenverbindungssystem nach Anspruch 1, dadurch gekennzeichnet, daß der Beschlag (21) und die Halterung (33) auf Höhe ihrer Anlenkung Absätze (29 bzw. 31) aufweist, die durch ein deformierbares Zwischenteil (34) aus Gummi voneinander getrennt sind und die miteinander zusammenwirken, um die von den Rädern stammenden Längskräfte aufzunehmen.

3. Tandemachsenverbindungssystem nach Anspruch 1, dadurch gekennzeichnet, daß die Blattfedern (14-15) von einem elastischen U-förmigen Kissen (19) auf Höhe ihrer Verbindung mit dem Beschlag (21) umgeben sind.

4. Tandemachsenverbindungssystem nach Anspruch 1, dadurch gekennzeichnet, daß die Schwingarme (37) in einer waagrechten Ebene angeordnet sind, die im geringen Abstand von derjenigen angeordnet ist, welche die Achsen (35) enthält, wobei ihre Verbindung mit der Querstrebe (36) mittels Gelenken erfolgt, die um senkrechte Achsen (b-b) beweglich sind, während ihre Verbindung mit dem Zwischenteil (40) mittels eines Gelenks erfolgt, das um eine waagrechte Achse (a-a) beweglich ist ;

5. Tandemachsenverbindungssystem nach Anspruch 1, dadurch gekennzeichnet, daß der obere Abschnitt der Querstrebe (36) als Achsschemel zum Ankuppeln eines Anhängers ausgestaltet ist.

6. Tandemachsenverbindungssystem nach Anspruch 1, dadurch gekennzeichnet, daß die Federn (14-15) aus einer im Spritzgießverfahren hergestellten Kunststoffzusammensetzung bestehen mit konstantem Querschnitt.

## FIG. 1

## FIG. 4

FIG.2

FIG. 3

FIG. 5

0 183 599